# EUROPÄISCHE PATENTANMELDUNG

(11) **EP 4 550 136 A1**
(43) Veröffentlichungstag der Anmeldung: **07.05.2025**
(21) Anmeldenummer: 23207877.4
(22) Anmeldetag: 06.11.2023
(51) Int. Cl.: G06F 9/48, G05B 19/05, G06F 9/4401

(54) **VERFAHREN ZUR AUSFÜHRUNGSSTEUERUNG VON TASKS IN EINEM PROZESSORSYSTEM UND TASKAUSFÜHRUNGSSTEUERUNG**

(71) Anmelder: Schaeffler Technologies AG & Co. KG, 91074 Herzogenaurach (DE)
(72) Erfinder: Claraz, Denis, 80687 München (DE); Mader, Ralph, 80687 München (DE)
(74) Vertreter: Vitesco Technologies

(57) **Zusammenfassung**

Das Prozessorsystem umfasst einen Einzelkernprozessor mit einem einzelnen Prozessorkern oder einen Mehrkernprozessor mit einer Vielzahl von Prozessorkernen und ein Echtzeitbetriebssystem, wobei das Echtzeitbetriebssystem ein Tasksystem mit Tasks umfasst. Das Prozessorsystem weist Softwarekomponenten auf, die jeweils auf einem oder mehreren der Prozessorkerne ausführbar sind und mittels derer Funktionen, die dem Steuergerät zugeordnet sind, realisiert werden.

In Antwort auf die Detektion der Initialisierungsanforderung wird das Tasksystem in einen Verzögerungsmodus überführt, so dass während einer folgenden vorgegebenen Initialisierungs-Zeitspanne zumindest Tasks, denen die geringste Ausführungspriorität der Ausführungsprioritäten zugeordnet ist, nicht ausgeführt werden. Während der vorgegebenen Initialisierungs-Zeitspanne wird ein jeweiliger Initialisierungs-Task auf dem einzelnen Prozessorkern beziehungsweise auf ausgewählten oder allen Prozessorkernen (Core1, Core2) ausgeführt, wobei mittels der jeweiligen Initialisierungs-Task alle oder ein Großteil der Programmvariablen der Softwarekomponenten (SWC) der betroffenen Prozessorkerne in einen vorgegeben Zustand überführt werden,

Nach Ende der vorgegebenen Initialisierungs-Zeitspanne wird das Tasksystem wieder in den Normalbetriebsmodus überführt.

## Beschreibung

Die Erfindung betrifft ein Verfahren zur Ausführungssteuerung von Tasks in einem Prozessorsystem eines Steuergeräts, insbesondere eines Fahrzeugsteuergeräts, und eine Taskausführungssteuerung sowie ein Steuergerät. Die Erfindung betrifft des Weiteren ein Computerprogramm zur Ausführungssteuerung von Tasks in einem Prozessorsystem. Die Erfindung betrifft ferner ein computerlesbares Medium.

Die Anzahl von Fahrzeugfunktionen insbesondere von Elektrik/Elektronik-Funktionen (E/E-Funktionen) von Kraftfahrzeugen haben in den vergangenen Jahren stark zugenommen. Beispielsweise werden immer präzisere und effizientere Motorsteuergeräte eingesetzt, um eine Verbrauchsminimierung, Wirkungsgradsteigerung und Emissionsreduzierung von Motoren zu erzielen. Aktive Sicherheitssysteme, wie etwa das Elektronische Stabilitätsprogramm (ESP), mindern das Unfallrisiko für Fahrzeuginsassen und Passanten präventiv. Passive Sicherheitssysteme, zu denen unter anderem Airbags, Gurtstraffer oder aktive Kopfstützen zählen, reduzieren das Schadensausmaß in Unfallsituationen. Fahrerassistenzsysteme unterstützen den Fahrer in verschiedensten Park- und Fahrsituationen: Parkassistenzsysteme helfen zum Beispiel beim Parkplatz-suchen oder bei Einparkmanövern. Infotainmentsysteme unterhalten und informieren Fahrzeuginsassen während der Fahrt.

Aufgrund des gestiegenen Bedarfs an Rechenleistung werden für die Steuergeräte zunehmend Mehrkernprozessoren eingesetzt. Eine besondere Herausforderung bei der Verwendung von Mehrkernprozessoren in Steuergeräten ist die korrekte Initialisierung der Softwarekomponenten, zum Beispiel nach einem Start des Motors. Bei Prozessorsystemen mit einem Mehrkernprozessor kann es vorkommen, dass Zustandsänderungen einer Einrichtung des Fahrzeuges, welche dazu führen, das Daten neu eingesetzt, das heißt Variablen neu initialisiert werden müssen, von den einzelnen Prozessorkernen des Mehrkernprozessors zu unterschiedlichen Zeiten registriert werden. Auch können Situationen auftreten, dass eine Softwarekomponente, die von einem der Prozessorkerne ausgeführt wird, abhängig ist von einer Ausgangsgröße einer anderen Softwarekomponente, die auf einem anderen Prozessorkern ausgeführt wird, und daher erst zeitlich verzögert auf die Zustandsänderung reagieren kann. Erfolgt die Initialisierung der Softwarekomponenten zeitlich unterschiedlich, kann dies dazu führen, dass unterschiedliche Softwarekomponenten eines Steuergerätes zum selben Zeitpunkt Eingangsgrößen derselben Komponente des Kraftfahrzeuges, die unterschiedliche Zustände oder Werte aufweisen, auswerten. Dies kann wiederum zu einem inkonsistenten Systemverhalten und damit zu kritischen Situationen führen.

Aber auch bei Einzelprozessorsystemen kann es vorkommen, dass eine Softwarekomponente, die von dem Prozessorkern ausgeführt wird, abhängig ist von einer Ausgangsgröße einer anderen Softwarekomponente, die auf dem Prozessorkern ausgeführt wird, und daher erst zeitlich verzögert auf die Zustandsänderung reagieren kann.

Aufgabe der vorliegenden Erfindung ist es daher, ein Verfahren zur Ausführungssteuerung von Tasks in einem Prozessorsystem anzugeben, das einen Beitrag dazu leistet, dass das Prozessorsystem zuverlässig Betrieb werden kann.

Die Aufgabe wird gelöst durch die Merkmale der unabhängigen Patentansprüche. Vorteilhafte Ausgestaltungen sind in den Unteransprüchen gekennzeichnet.

Gemäß einem ersten und zweiten Aspekt wird die Aufgabe gelöst durch ein Verfahren zur Ausführungssteuerung von Tasks in einem Prozessorsystem eines Steuergeräts für beispielsweise ein Fahrzeug und eine korrespondierende Taskausführungssteuerung. Das Prozessorsystem weist einen Einzelkernprozessor oder einen Mehrkernprozessor und ein Echtzeitbetriebssystem auf. Der Begriff "Prozessor" umfasst hierbei sowohl einen Mikrocontroller als auch ein Mikroprozessor. Der Einzelkernprozessor weist einen einzelnen Prozessorkern auf. Der Mehrkernprozessor weist eine Mehrzahl an Prozessorkernen auf. Das Steuergerät kann beispielsweise ein Motorsteuergerät, Getriebesteuergerät, eine Domänenkontrolleinheit, eine Zonenkontrolleinheit oder eine Haupt-Domänenkontrolleinheit sein.

Das Echtzeitbetriebssystem umfasst ein Tasksystem mit Tasks, die wiederholt oder sporadisch ausgeführt werden. Die Steuergeräte eines Fahrzeugs arbeiten vorzugsweise in diskreten Zeitintervallen. Die Länge eines solchen Zeitintervalls kann dabei fest, beispielsweise durch eine Zeitdauer von 10 Millisekunden, oder ereignisabhängig, beispielsweise durch eine Motordrehung, definiert sein. Die wiederholte Ausführung der Tasks kann zeit-basiert oder ereignis-basiert (z. B. winkel-basiert) erfolgen.

Ein Task ist die kleinste von dem Echtzeitbetriebssystem verwaltete, planbare Einheit. Das Echtzeitbetriebssystem entscheidet, wann welcher Task auf welchem Prozessorkern ausgeführt wird. Der Task ist ein Element, das den Rahmen für die Ausführung einer Steuergeräte-Anwendung bildet. Der Task kann gleichzeitig mit anderen Tasks ausgeführt werden. Eine Task-Ablaufsteuerung (im Englischen task scheduler) des Echtzeitbetriebssystems steuert die Ausführung der Tasks entsprechend einer Task-Ablaufsteuerungs-Richtlinie (im Engl. task scheduling policy). Die Task-Ablaufsteuerungs-Richtlinie nutzt vorzugweise eine Taskpriorität der Tasks. Die Zuordnung der Taskpriorität zu der Task kann statisch oder dynamisch sein. Alternativ kann die Task-Ablaufsteuerungs-Richtlinie einen Task-Ablaufsteuerungs-Plan umfassen.

Erfindungsgemäß ist den Tasks jeweils eine von zumindest zwei unterschiedlichen Ausführungsprioritäten zugeordnet. Die Ausführungspriorität unterscheidet sich vorzugsweise von der in dem Echtzeitbetriebssystem allgemein genutzten Taskpriorität. Ein Echtzeitbetriebssystem sieht beispielsweise 20 Prioritätsebenen für die Taskprioritäten vor. Für die Ausführungspriorität sind beispielsweise vier Prioritätsebenen bzw. Prioritätslevel vorgesehen. D.h. einer Prioritätsebene der Ausführungspriorität ist vorzugsweise eine Gruppe von Prioritätsebenen der Taskprioritäten des Echtzeitbetriebssystems zugeordnet.

Die Ausführungspriorität der jeweiligen Tasks bestimmt sich beispielsweise nach der "Deadline" der Task. Bei zeitbasierten Tasks entspricht die jeweilige Task-Deadline vorzugsweise der Zykluszeit der Task.

Das Prozessorsystem umfasst Softwarekomponenten mittels derer Funktionen, die dem Steuergerät zugeordnet sind, realisiert werden. Die Funktionen, die dem Steuergerät zugeordnet sind, sind beispielsweise Fahrzeugfunktionen, vorzugsweise Teilfunktionen von Fahrzeugfunktionen.

Eine vollständige Fahrzeugfunktion, beispielsweise eine adaptive Geschwindigkeitsregelung, wird durch eine Funktionswirkkette repräsentiert. Die Funktionswirkkette fasst alle an der Wirkkette beteiligten logischen Funktionen zusammen. Die Funktionsketten ermöglichen die Abbildung einzelner Funktionspfade in komplex vernetzten logischen Systemarchitekturen. Die logischen Funktionen werden auf die Steuergeräte des Fahrzeugs verteilt beziehungsweise die logischen Funktionen werden den Steuergeräten des Fahrzeugs zugeordnet. In vielen Fällen wird eine Vielzahl der logischen Funktionen in Form von Software umgesetzt. Hierbei werden vorzugsweise die logischen Funktionen der logischen Systemarchitektur einzelnen Softwarekomponenten zugeordnet, in deren Umfang sie implementiert werden.

Von einer Softwarekomponente ist dann die Rede, wenn die darüber realisierte logische (Teil-) Funktion, zum Beispiel im Fahrzeug, softwarebasiert umgesetzt wird.

Das Prozessorsystem weist vorzugsweise verschiedene Arten von Softwarekomponenten auf. Beispielsweise kann das Prozessorsystem zusätzlich oder alternativ zu den Softwarekomponenten zur Realisierung von Fahrzeugfunktionen, die für einen Fahrzeugnutzer direkt erkennbar sind, zusätzlich Softwarekomponenten aufweisen, die Systemfunktion beziehungsweise Hilfsfunktionen realisieren.

Die Softwarekomponenten weisen jeweils zumindest eine Runnable-Funktion auf. Die Runnable-Funktionen sind den Tasks abhängig von zeitlichen Anforderungen an die Ausführung der Runnable-Funktionen und/oder der Funktionen zugeordnet, wobei der jeweilige Task eine Ausführungsreihenfolge der ihm zugeordneten Runnable-Funktionen definiert.

Das Echtzeitbetriebssystem sowie die Softwarekomponenten können gemäß einer AUTomotive Open System Architecture (AUTOSAR) Classic Plattform implementiert sein.

Das Verfahren zum Betreiben des Prozessorsystems umfasst hierbei die Schritte:
- Betreiben des Tasksystems in einem Normalbetriebsmodus für den einzelnen Prozessorkern beziehungsweise für ausgewählte Prozessorkerne der Mehrzahl der Prozessorkerne oder für alle Prozessorkerne der Mehrzahl der Prozessorkerne, wobei in dem Normalbetriebsmodus die Tasks gemäß einer vorgegebenen Task-Ablaufsteuerungs-Richtlinie des Echtzeitbetriebssystems ausgeführt werden,
- Detektion einer Initialisierungsanforderung für das Prozessorsystem, wobei die Initialisierungsanforderung von einem vorgegebenen Ereignis ausgelöst wird,
- in Antwort auf die Detektion der Initialisierungsanforderung Überführen des Tasksystems des einzelnen Prozessorkerns beziehungsweise der ausgewählter Prozessorkerne beziehungsweise aller Prozessorkerne in einen Verzögerungsmodus, so dass während einer folgenden vorgegebenen Initialisierungs-Zeitspanne zumindest Tasks, denen die geringste Ausführungspriorität der Ausführungsprioritäten zugeordnet ist, nicht ausgeführt werden,
- während der vorgegebenen Initialisierungs-Zeitspanne Ausführen einer Initialisierungs-Task auf dem einzelnen Prozessorkern beziehungsweise einer jeweiligen Initialisierungs-Task auf den ausgewählten Prozessorkernen beziehungsweise auf allen Prozessorkernen, wobei mittels der jeweiligen Initialisierungs-Task alle oder ein Großteil der Programmvariablen der Softwarekomponenten (SWC) der Prozessorkerne, auf denen die jeweilige Initialisierungs-Tasks ausgeführt werden, in einen vorgegeben Zustand überführt werden, um eine Datenintegrität sicherzustellen,
- nach Ende der vorgegebenen Initialisierungs-Zeitspanne Überführen des Tasksystems in den Normalbetriebsmodus für den einzelnen Prozessorkern beziehungsweise für die ausgewählten Prozessorkerne beziehungsweise für alle Prozessorkerne, wobei das Überführen des Tasksystems in den Normalbetriebsmodus ein Ausführen von verzögerten Tasks umfasst, deren Ausführung über die Initialisierungs-Zeitspanne hinweg verzögert wurde. In dem Normalbetriebsmodus werden die Tasks wieder gemäß der vorgegebenen Task-Ablaufsteuerungs-Richtlinie des Echtzeitbetriebssystems ausgeführt.

Die Taskausführungssteuerung kann Hardware- und/oder Softwaremodule umfassen. Bei einem Prozessorsystem mit einem Mehrkernprozessor kann die Taskausführungssteuerung beispielsweise einen oder mehrere ausgewählte Prozessorkerne des Mehrkernprozessors nutzen.

Das beschriebene Verfahren ermöglicht die Sicherstellung einer hohen Datenintegrität und hat zudem bei Mehrkernprozessorsystemen den Vorteil, dass der Initialisierungsprozess der Prozessorkerne parallel ausgeführt werden kann. Hierdurch kann eine Zeitdauer, über welche derartige Initialisierungs-Tasks insgesamt ausgeführt werden, und insgesamt die Zeitdauer, bis zu welcher die Prozessorkerne des Prozessorsystems das auslösende Ereignis verarbeitet haben und auf dieses entsprechend reagieren können, vereinheitlicht und erheblich verkürzt werden. So wird gewährleistet, dass unterschiedliche Prozessorkerne des Prozessorsystems zum selben Zeitpunkt keine unterschiedlichen Eingangsgrößen derselben Betriebsgröße auswerten, wodurch Kollisionen der einzelnen Funktionen des Steuergerätes untereinander vorgebeugt werden kann.

Weiter kann durch das Parallelisieren der Initialisierungs-Tasks der Bedarf an Speicherplatz in einem Puffer, das heißt in einem Zwischenspeicher, in welchem die Variablen abgelegt sind, die bei Auftreten des auslösenden Ereignisses aktualisiert werden müssen, reduziert werden, so dass durch das Verfahren auch die Anforderung in Bezug auf Rechenzeit als auch auf Speicherplatzanforderungen optimiert werden kann.

In zumindest einer vorteilhaften Ausgestaltung gemäß dem ersten und zweiten Aspekt umfasst das Tasksystem k Gruppen von Tasks mit k ≥ 2. Eine erste Gruppe der k Gruppen umfasst erste Tasks (d. h. k=1), denen eine niedrige Ausführungspriorität zugeordnet ist. Eine k-te Gruppe der k Gruppen umfasst k-te Tasks, denen eine höchste Ausführungspriorität zugeordnet ist. Der Wert von k repräsentiert somit die Ausführungsprioritätsebene der Tasks. Der Schritt des Überführens des Tasksystems in einen Verzögerungsmodus umfasst einen Schritt S, der für n = 1 bis n = k-i mit 0 ≤ i < k ausgeführt wird, wobei mit n = 1 gestartet wird. Vorteilhaft ist, ist wenn i =1 ist. Der Schritt S umfasst:
- Fortsetzen der n-ten Tasks, die bereits ausgeführt werden, bis zu ihrer Beendigung und Verzögern der Ausführung der n-ten Task, die von einer Task-Ablaufsteuerung für eine Ausführung aktiviert sind, aber noch nicht gestartet sind,
- wenn Schritt S auf dem einzelnen Prozessorkern beziehungsweise auf den ausgewählten Prozessorkernen beziehungsweise auf allen Prozessorkernen für die n-ten Tasks abgeschlossen ist, wiederholen von Schritt S für n=n+1.

Verzögerte beziehungsweise anhängige Tasks sind somit Tasks, die während der Überführung des Tasksystems in den Verzögerungsmodus zwar aktiviert waren oder wurden, aber deren Ausführung verzögert, d. h. insbesondere nicht gestartet, wurde.

Die Verzögerung ist zeitlich beschränkt. Die Verzögerung der aktivierten, aber nicht gestarteten Tasks endet nach der Initialisierungs-Zeitspanne abhängig von der Ausführungspriorität der jeweiligen Tasks. Nach der Initialisierungs-Zeitspanne werden die verzögerten Tasks abhängig von ihrer Ausführungspriorität gestartet und ausgeführt.

In zumindest einer vorteilhaften Ausgestaltung gemäß dem ersten und zweiten Aspekt umfasst das Tasksystem k Gruppen von Tasks mit k ≥ 2. Eine erste Gruppe der k Gruppen umfasst erste Tasks (d.h. k=1), denen eine niedrige Ausführungspriorität zugeordnet ist. Eine k-te Gruppe der k Gruppen umfasst k-te Tasks, denen eine höchste Ausführungspriorität zugeordnet ist. Der Wert von k repräsentiert somit die Ausführungsprioritätsebene der Tasks. Der Schritt des Überführens des Tasksystems in einen Verzögerungsmodus umfasst einen Schritt S, der für n = 1 bis n = k-i mit 0 ≤ i < k ausgeführt wird, wobei mit n = 1 gestartet wird. Vorteilhaft ist, ist wenn i=1 ist. Der Schritt S umfasst:
- Fortsetzen der n-ten Tasks des jeweiligen Prozessorkerns, die bereits ausgeführt werden, bis zu ihrer Beendigung und Verzögern der Ausführung der n-ten Task des jeweiligen Prozessorkerns, die von einer Task-Ablaufsteuerung für eine Ausführung aktiviert sind, aber noch nicht gestartet sind,
- wenn Schritt S auf dem jeweiligen Prozessorkern für die n-ten Tasks abgeschlossen ist, wiederholen von Schritt S für n=n+1.

In zumindest einer vorteilhaften Ausgestaltung gemäß dem ersten und zweiten Aspekt wird die Phase des Überführens in den Verzögerungsmodus auf den ausgewählten Prozessorkernen beziehungsweise auf allen Prozessorkernen gleichzeitig gestartet und/oder wird die Initialisierungs-Zeitspanne auf den ausgewählten beziehungsweise allen Prozessorkernen gleichzeitig gestartet und/oder wird die Phase des Überführens in den Normalbetriebsmodus auf den ausgewählten beziehungsweise auf allen Prozessorkernen gleichzeitig gestartet.

In zumindest einer vorteilhaften Ausgestaltung gemäß dem ersten und zweiten Aspekt wird während des Überführens des Tasksystems in den Verzögerungsmodus für zumindest einen Teil der Tasks, deren Start, und somit deren Ausführung, verzögert ist, jeweils eine Information, dass der jeweilige Task anhängig beziehungsweise verzögert ist, gespeichert. Vorzugsweise wird für alle Tasks, deren Start, und somit deren Ausführung, verzögert ist, diese Information gespeichert. Vorteilhafterweise ermöglicht dies das zuverlässige Hochfahren des Tasksystems in den Normalbetriebsmodus.

In zumindest einer vorteilhaften Ausgestaltung gemäß dem ersten und zweiten Aspekt erfolgt das Ausführen der verzögerten Tasks abhängig von der Ausführungsprioritäten der verzögerten bzw. anhängigen Tasks. Wenn die verzögerten Tasks die gleiche Ausführungspriorität aufweisen, kann zum Beispiel das First-In-First-Out-Prinzip (FIFO-Prinzip) angewendet werden.

In zumindest einer vorteilhaften Ausgestaltung gemäß dem ersten und zweiten Aspekt weist die Initialisierungs-Zeitspanne eine erste Initialisierungsphase und eine zweite Initialisierungsphase auf. Die erste Initialisierungsphase liegt zeitlich vor der zweiten Initialisierungsphase. In der ersten Initialisierungsphase werden ausschließlich k-te Tasks gemäß der vorgegebenen Task-Ablaufsteuerungs-Richtlinie ausgeführt und in der zweiten Initialisierungsphase werden k-te Tasks gemäß der vorgegebenen Task-Ablaufsteuerungs-Richtlinie sowie verzögerte (k-1)-te Tasks ausgeführt. Insbesondere können in der zweiten Initialisierungsphase die verzögerten (k-1)-te Tasks, die bereits vor der Initialisierungszeitspanne aktiviert wurden, und (k-1)-te Tasks, die in der zweiten Initialisierungsphase aktiviert werden, gemäß der vorgegebenen Task-Ablaufsteuerungs-Richtlinie des Echtzeitbetriebssystems ausgeführt werden. Interrupts, können, da sie nicht von dem Echtzeitbetriebssystem gesteuert werden, jederzeit und somit auch während der gesamten Initialisierungs-Zeitspanne ausgeführt werden.

In zumindest einer vorteilhaften Ausgestaltung gemäß dem ersten Aspekt und zweiten Aspekt ist das Steuergerät ein Steuergerät eines Fahrzeugs und das vorgegebene Ereignis umfasst ein Zurücksetzen eines Prozessorkerns und/oder ein Herunterfahren des Prozessorsystems und/oder ein Löschen eines Speicherinhalts eines nichtflüchtigen Speichers und/oder ein Unfall des Fahrzeugs und/oder ein Ende eines Fahrzyklus des Fahrzeugs und/oder eine Detektion eines Kurbelwellenpositionssensorsignals zum Start eines Motors.

In zumindest einer vorteilhaften Ausgestaltung gemäß dem ersten Aspekt und zweiten Aspekt ist der jeweiligen Initialisierungstask abhängig von dem Ereignis, das die Initialisierungsanforderung auslöst. Dies ermöglicht, die Initialisierung effizient auszuführen. Hierbei kann der jeweilige Initialisierungstask verschiedene Teile aufweisen, die jeweils zu verschiedenen Ereignissen korrespondieren, und nur der entsprechende Teil wird ausgeführt. Alternativ ist möglich, dass der Initialisierungstask nur Teile besitzt, die bei einem bestimmten Ereignis ausgeführt werden.

In zumindest einer vorteilhaften Ausgestaltung gemäß dem ersten und zweiten Aspekt ist die Zuordnung der Tasks zu den Gruppen von Tasks abhängig von dem Ereignis, das die Initialisierungsanforderung auslöst. Beispielsweise kann einem bestimmten Task, wenn ein erstes Ereignis die Initialisierungsanforderung auslöst, der (k-1 )-ten Gruppe von Tasks zugeordnet werden. Wenn dagegen ein zweites Ereignis die Initialisierungsanforderung auslöst, kann der bestimmte Task der (k-2)-ten Gruppe von Tasks zugeordnet werden.

Gemäß einem dritten Aspekt wird die Aufgabe gelöst durch ein Steuergerät, das ein Prozessorsystem mit einer Taskausführungssteuerung gemäß dem zweiten Aspekt aufweist. Das Prozessorsystem umfasst einen Einzelkernprozessor mit einem einzelnen Prozessorkern oder einen Mehrkernprozessor mit einer Mehrzahl an Prozessorkernen und ein Echtzeitbetriebssystem, wobei das Echtzeitbetriebssystem ein Tasksystem mit Tasks, die wiederholt oder sporadisch ausführbar sind und denen jeweils eine von zumindest zwei unterschiedlichen Ausführungsprioritäten zugeordnet sind, umfasst. Das Prozessorsystem weist Softwarekomponenten auf, die jeweils auf einem oder mehreren der Prozessorkerne ausführbar sind und mittels derer Funktionen, die dem Steuergerät zugeordnet sind, realisiert werden. Die Softwarekomponenten umfassen beispielsweise jeweils zumindest eine Runnable-Funktion. Die Runnable-Funktionen sind abhängig von zeitlichen Anforderungen an die Ausführung der Runnable-Funktionen und/oder der Funktionen den Tasks zugeordnet, wobei der jeweilige Task eine Ausführungsreihenfolge der ihm zugeordneten Runnable-Funktionen definiert.

Vorteilhafte Ausgestaltungen gemäß dem ersten und zweiten Aspekt gelten hierbei auch für den dritten Aspekt.

Gemäß einem vierten Aspekt wird die oben genannte Aufgabe gelöst durch ein Computerprogramm umfassend Befehle, die bei der Ausführung des Programms durch einen Computer diesen veranlasst, das Verfahren gemäß dem ersten Aspekt auszuführen.

Der Computer im Sinne dieses Dokuments wird durch das Prozessorsystem gebildet oder kann Teil des Prozessorsystems sein.

Gemäß einem fünften Aspekt wird die oben genannte Aufgabe gelöst durch ein computerlesbares Medium, das Befehle aufweist, die bei der Ausführung durch einen Computer, den Computer veranlassen, das Verfahren gemäß dem ersten Aspekt auszuführen.

Vorteilhafte Ausgestaltungen gemäß dem ersten Aspekt gelten hierbei auch für den vierten und fünften Aspekt.

Das Computerprogramm kann auf einem computerlesbaren Speichermedium (CD-Rom, DVD, Blu-ray Disk, Wechsellaufwerk, flüchtiger oder nicht-flüchtiger Speicher, insbesondere Direktzugriffsspeicher (Englisch: Random Access Memory, kurz RAM), Festwertspeicher (Englisch: Read-Only Memory, kurz ROM), löschbarer programmierbaren Festwertspeicher (Englisch: Erasable Programmable Read Only Memory, kurz EPROM), und/oder Flash-Speicher abgespeichert sein. Das Speichermedium kann ein im Prozessor eingebauter Speicher, ein außerhalb des Prozessors auf einer Baugruppe angeordneter Speicher oder ein tragbarer Speicher sein. Der Speicher ist konfiguriert, um zugehörige Programmanweisungen und zugehörige Daten zu speichern. Ferner kann das Computerprogramm in einem Netzwerk wie beispielsweise dem Internet bereitgestellt werden, von dem es bei Bedarf von einem Nutzer heruntergeladen werden kann.

Ausführungsbeispiele der Erfindung sind im Folgenden anhand der schematischen Zeichnungen näher erläutert.

Es zeigen:
- Figur 1: ein beispielhaftes schematisches Blockdiagramm eines Prozessorsystems eines Steuergerätes,
- Figur 2: ein beispielhaftes Ablaufdiagramm eines Ausführungsbeispiels eines Programms zur Ausführungssteuerung von Tasks eines Prozessorsystems,
- Figur 3: einen beispielhaften zeitlichen Verlauf des Verzögerns und des Wiederanlaufens des Tasksystems nach einer Detektion einer Initialisierungsanforderung,
- Figur 4: einen weiteren beispielhaften zeitlichen Verlauf des Verzögerns und des Wiederanlaufens des Tasksystems nach einer Detektion der Initialisierungsanforderung und
- Figur 5: einen weiteren beispielhaften zeitlichen Verlauf des Verzögerns und des Wiederanlaufens des Tasksystems einer der Detektion der Initialisierungsanforderung.

In den Figuren werden für Elemente mit im Wesentlichen gleicher Funktion gleiche Bezugszeichen verwendet, diese Elemente müssen jedoch nicht in allen Einzelheiten identisch sein.

Die Beschreibung der hier angegebenen Gegenstände ist nicht auf die einzelnen speziellen Ausführungsformen beschränkt. Merkmale von unterschiedlichen Ausführungsbeispielen können - soweit technisch sinnvoll - miteinander kombiniert werden, um weitere Ausführungsbeispiele zu bilden. Zum Beispiel können Variationen oder Modifikationen, die im Hinblick auf eines der Ausführungsbeispiele beschrieben sind, auch auf andere Ausführungsbeispiele anwendbar sein, außer dies ist anderweitig angegeben.

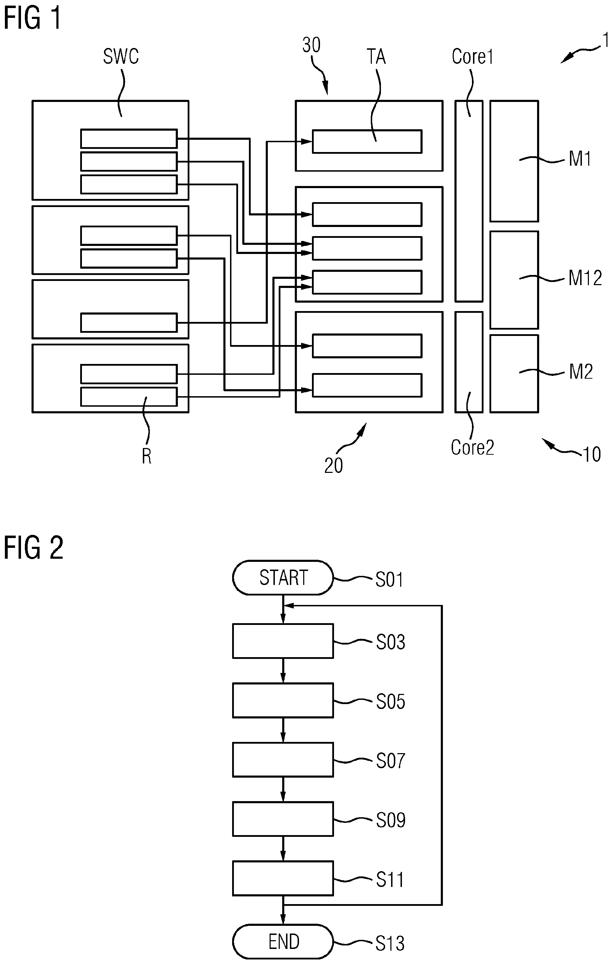

Figur 1 zeigt ein beispielhaftes schematisches Blockdiagramm eines Prozessorsystems 10 eines Steuergerätes 1, zum Beispiel eines Steuergeräts eines Fahrzeugs. Alternativ kann das Steuergerät 1 mit dem Prozessorsystem 10 für ein anderes System mit Echtzeitanforderungen, zum Beispiel ein Flugverkehrskontrollsystem oder Prozesssteuerungssystem, genutzt werden.

Das Prozessorsystem 10 umfasst beispielhaft einen Mehrkernprozessor, ein Echtzeitbetriebssystem 20 sowie mehrere Softwarekomponenten SWC. Alternativ kann das Prozessorsystem 10 einen Einzelkernprozessor umfassen.

Der Mehrkernprozessor umfasst eine Mehrzahl von Prozessorkernen Core1, Core2. Der Mehrkernprozessor weist beispielsweise eine homogene Architektur auf, d. h. die Prozessorkerne Core1, Core2 sind von einem gleichen Typ. Alternativ ist möglich, dass der Mehrkernprozessor eine heterogene Architektur aufweist, d. h. verschiedene Typen von Prozessorkernen aufweist.

Der Mehrkernprozessor gemäß Figur 1 weist beispielhaft einen ersten Prozessorkern Core 1 und einen zweiten Prozessorkern Core2 auf. Der Mehrkernprozessor weist beispielsweise für jeden Prozessorkern Core1, Core2 eine eigene Speichereinheit M1, M2 auf. Die Speichereinheit M1, M2 umfasst beispielsweise jeweils einen Flash-Speicher und/oder einen RAM-Speicher und/oder einen Cache-Speicher. Ferner umfasst der Mehrkernprozessor beispielsweise eine gemeinsame Speichereinheit M12, auf die beide Prozessorkerne Core1, Core2 zugreifen können. Die gemeinsame Speichereinheit M12 umfasst beispielsweise einen Flash-Speicher und/oder einen RAM-Speicher.

Der Mehrkernprozessor weist vorzugsweise einen internen Kommunikationsbus (in Figur 1 nicht gezeigt) auf.

Das Echtzeitbetriebssystem 20 umfasst ein Tasksystem 30 mit Tasks TA, die wiederholt oder sporadisch ausgeführt werden. Eine Task-Ablaufsteuerung beziehungsweise ein Scheduler des Echtzeitbetriebssystems 20 bestimmt, welcher Task TA aktuell ausgeführt werden soll. Der jeweilige Task TA weist in einem Normalbetriebsmodus zum Beispiel einen der folgenden Zustände auf:
- Suspended (ausgesetzt): Der Task TA ist nicht bereit für die Ausführung bereit.
- Ready (aktiviert): Der Task TA ist bereit zur Ausführung, wird aber aktuell nicht ausgeführt.
- Running (ausgeführt): Der Task TA wird ausgeführt.
- Waiting (wartend): Der Task TA wartet auf eine Ressource oder ein Ereignis und ist nicht bereit für die Ausführung.

Den Tasks TA wird von dem Echtzeitbetriebssystem vorzugsweise eine eindeutige Taskpriorität zugeordnet. Die Zuordnung kann statisch oder dynamisch erfolgen.

Den Tasks TA wird eine Ausführungspriorität zugeordnet. Die Ausführungspriorität der Tasks unterscheidet sich vorzugsweise von den eigentlichen Taskprioritäten des Echtzeitbetriebssystems. In einer Ausführungsprioritätsebene sind beispielsweise mehrere Taskprioritätsebenen zusammengefasst. Die Zuordnung der Ausführungspriorität zu den Tasks erfolgt in einer Design-Phase.

Das Tasksystem 30 weist k Gruppen, beispielsweise vier Gruppen von Tasks TA auf. Eine erste Gruppe von Tasks umfasst erste Tasks TA_P1, denen jeweils eine niedrige Ausführungspriorität zugeordnet ist. Die ersten Tasks TA_P1 weisen beispielsweise eine Deadline von größer oder gleich 20 ms auf. Eine zweite Gruppe von Tasks umfasst zweite Tasks TA_P2, denen jeweils eine mittlere Ausführungspriorität zugeordnet ist. Die zweiten Tasks TA_P2 weisen beispielsweise eine Deadline von zwischen kleiner 20 ms und größer oder gleich 5 ms auf. Eine dritte Gruppe von Tasks umfasst dritte Tasks TA_P3, denen jeweils eine hohe Ausführungspriorität zugeordnet ist. Die dritten Tasks TA_P3 weisen beispielsweise eine Deadline von zwischen kleiner 5 ms und größer oder gleich 1 ms auf. Eine vierte Gruppe von Tasks umfasst vierte Tasks TA_P4, denen jeweils eine höchste Ausführungspriorität zugeordnet ist. Die vierten Tasks TA_P4 weisen beispielsweise eine Deadline von kleiner 1 ms auf.

Alternativ kann das Tasksystem 30 mehr oder weniger als die hier beispielhaft genannten vier Ausführungsprioritätsebenen aufweisen.

Die Tasks TA werden den Prozessorkernen Core1, Core2 zugeordnet, d. h. der jeweilige Task TA wird von einem der Prozessorkerne Core1, Core2 ausgeführt.

Mittels der Softwarekomponenten SWC werden Funktionen, die dem Steuergerät 1 zugeordnet sind, realisiert. Die Softwarekomponenten SWC können auf einem oder mehreren der Prozessorkerne Core1, Core2 ausgeführt werden. Die Softwarekomponenten SWC können jeweils (Teil-)Fahrzeugfunktionen realisieren, die für einen Fahrzeugnutzer direkt erkennbar sind. Die Softwarekomponenten SWC können jedoch auch Systemfunktion beziehungsweise Hilfsfunktionen realisieren.

Beispiele für verschiedene Arten von Softwarekomponenten SWC sind:
- Sensor/Aktuator-Software-Komponenten, die Sensorauswertungsfunktionen und Aktorsteuerungsfunktionen realisieren,
- Applikations-Softwarekomponenten, die (einen Teil) einer Applikation, realisieren implementiert.
- Kalibrierungsparameter-Softwarekomponenten, die Werte für Kalibrierungsparameter bereitstellt.
- Service-Softwarekomponenten, die standardisierte Dienste über standardisierte Schnittstellen bereit bereitstellen.
- Hardware-Abstraktions-Softwarekomponente, die den Zugriff auf die spezifischen IO-Fähigkeiten des Steuergeräts 1 ermöglicht.
- Speicher-Softwarekomponente, die anderen Softwarekomponenten den Zugriff auf nichtflüchtige Daten ermöglichen.

Die Softwarekomponenten SWC weisen beispielsweise jeweils zumindest eine Runnable-Funktion R auf. Die Runnable-Funktionen R sind jeweils die Ausführungseinheit einer der Softwarekomponenten SWC. Die Runnable-Funktionen R werden beispielsweise als C Funktion (Programmkonstrukt) implementiert. Die Runnable-Funktionen R werden in der Design-Phase abhängig von zeitlichen Anforderungen an die Ausführung der Runnable-Funktionen R und/oder der Funktionen den Tasks TA zugeordnet. Der jeweilige Task TA definiert eine Ausführungsreihenfolge der ihm zugeordneten Runnable-Funktionen R. Die jeweilige Runnable-Funktion R wird durch eine Abfolge von Anweisungen beschrieben, die von einer Laufzeitumgebung (Runtime Environment, RTE) gestartet werden kann.

Figur 2 zeigt ein beispielhaftes Ablaufdiagramm eines Ausführungsbeispiels eines Programms zur Ausführungssteuerung von Tasks TA eines Prozessorsystems 10 eines Steuergeräts 1. Das Steuergerät 1 ist beispielsweise ein Fahrzeugsteuergerät.

Das Programm ist beispielsweise Teil des Echtzeitbetriebssystems 20, insbesondere ein Teil eines Schedulers, der die die zeitliche Ausführung mehrerer Prozesse in Echtzeitbetriebssystemen und in der Anwendungsvirtualisierung regelt beziehungsweise vorgibt.

Das Programm wird beispielsweise von dem Prozessorsystem 10 ausgeführt.

In einem Schritt S01 wird das Programm gestartet, beispielsweise wenn das Fahrzeug in Betrieb genommen wird und/oder eine Einrichtung des Fahrzeugs, die in Verbindung steht mit dem Steuergerät 1, aktiviert wird.

In einem Schritt S03 wird zunächst das Tasksystem 30 in einem Normalbetriebsmodus betrieben, wobei in dem Normalbetriebsmodus die Tasks TA insbesondere gemäß einer vorgegebenen Task-Ablaufsteuerungs-Richtlinie des Echtzeitbetriebssystems ausgeführt werden.

In einem Schritt S05 wird eine Initialisierungsanforderung für das Prozessorsystem detektiert. Beispielsweise wird ein Ereignis, zum Beispiel ein Ende eines Fahrzyklus des Fahrzeugs, das eine Initialisierung bedingt, detektiert. Die Detektion des Ereignisses kann vom Prozessorsystem als Initialisierungsanforderung interpretiert werden oder das Prozessorsystem kann eine zusätzliche Nachricht erhalten, die die Initialisierungsanforderung umfasst.

Das Ereignis kann zur Folge haben, dass neue Tasks TA hinzukommen und/oder dass Tasks TA wegfallen und/oder Tasks TA mit anderen Anfangswerten von Variablen arbeiten müssen. Insbesondere bei einem Mehrprozessorsystem kann, wenn die Initialisierung der Softwarekomponenten SWC zeitlich unterschiedlich erfolgt, dies dazu führen, dass unterschiedliche Softwarekomponenten SWC des Steuergerätes 1 zum selben Zeitpunkt Eingangsgrößen derselben Komponente des Kraftfahrzeuges, die unterschiedliche Zustände aufweisen, auswerten. Dies kann wiederum zu einem inkonsistenten Systemverhalten und damit zu kritischen Situationen führen.

Aus diesem Grund wird in einem Schritt S07 das Tasksystem 30 auf ausgewählten Prozessorkernen oder allen Prozessorkernen des Prozessorsystems in einen Verzögerungsmodus überführt, so dass während einer folgenden vorgegebenen Initialisierungs-Zeitspanne auf den ausgewählten beziehungsweise auf allen Prozessorkernen zumindest Tasks TA, denen die geringste Ausführungspriorität der Ausführungsprioritäten zugeordnet ist, nicht ausgeführt werden.

Beispielsweise umfasst das Tasksystem 30 die im Zusammenhang mit Figur 1 beschriebenen ersten Tasks TA_P1, denen eine niedrige Ausführungspriorität zugeordnet ist, die zweiten Tasks TA_P2, denen eine mittlere Priorität zugeordnet ist, die dritten Tasks TA_P3, denen eine hohe Priorität zugeordnet ist und die vierten Tasks TA_P4, denen eine höchste Priorität zugeordnet ist.

In einem Schritt a) werden die ersten Tasks TA_P1, die bereits ausgeführt werden, fortgesetzt ausgeführt bis zu ihrer Beendigung. Zusätzlich werden die ersten Tasks TA_P1, die von einer Task-Ablaufsteuerung für eine Ausführung aktiviert sind, aber noch nicht gestartet sind, verzögert. Wenn Schritt a) auf den ausgewählten beziehungsweise auf allen Prozessorkernen Core1, Core2 abgeschlossen ist, werden in einem Schritt b) die zweiten Tasks TA_P2, die bereits ausgeführt werden, fortgesetzt ausgeführt bis zu ihrer Beendigung und die zweiten Tasks TA_P2, die von der Task-Ablaufsteuerung für eine Ausführung aktiviert sind, aber noch nicht gestartet sind, werden verzögert. Wenn Schritt b) auf den ausgewählten Prozessorkernen Core1, Core2 beziehungsweise allen Prozessorkernen Core1, Core2 abgeschlossen ist, werden in einem Schritt c) die dritten Tasks TA_P3, die bereits ausgeführt werden, fortgesetzt ausgeführt bis zu ihrer Beendigung und die dritten Tasks TA_P3, die von der Task-Ablaufsteuerung für eine Ausführung aktiviert sind, aber noch nicht gestartet sind, werden verzögert.

In einem Schritt S09 wird während der vorgegebenen Initialisierungs-Zeitspanne ein jeweiliger Initialisierungs-Task auf den ausgewählten beziehungsweise allen Prozessorkernen Core1, Core2 ausgeführt. Mittels den jeweiligen Initialisierungs-Task werden alle oder ein Großteil der Programmvariablen der Softwarekomponenten SWC, die auf den Prozessorkernen ausgeführt werden, in einen vorgegeben Zustand überführt, um eine Datenintegrität sicherzustellen, insbesondere um eine physikalische Datenintegrität sicherzustellen.

Die ersten und zweiten Tasks TA_P1, TA_2 verbleiben in dem Verzögerungsmodus zumindest so lange, bis die Initialisierungs-Zeitspanne beendet ist. Nach Ende der vorgegebenen Initialisierungs-Zeitspanne wird in einem Schritt S11 das Tasksystem 30 auf den ausgewählten Prozessorkernen Core1, Core2 beziehungsweise auf allen Prozessorkernen in den Normalbetriebsmodus überführt, wobei das Überführen in den Normalbetriebsmodus ein Ausführen der verzögerten Tasks TA umfasst.

Das Ausführen der verzögerten Tasks TA erfolgt beispielsweise abhängig von der Ausführungspriorität der verzögerten Tasks TA. Beispielsweise können, wenn eine erste Initialisierungsphase C1 der Initialisierungs-Zeitspanne C auf den ausgewählten Prozessorkernen beziehungsweise allen Prozessorkernen beendet ist, zunächst die verzögerten dritten Tasks TA_P3 ausgeführt werden. Wenn die Initialisierungs-Zeitspanne C auf den ausgewählten Prozessorkernen beziehungsweise allen Prozessorkernen beendet ist, können auch die verzögerten zweiten Tasks TA_P2 und verzögerten ersten Tasks TA_P1 auf des ausgewählten beziehungsweise allen Prozessorkernen Core1, Core2 ausgeführt werden.

Vorzugsweise werden Tasks, die die höchste Priorität aufweisen, hier die vierten Tasks TA_P4, auch während der gesamten Initialisierungs-Zeitspanne ausgeführt.

Interrupts werden üblicherweise nicht vom Echtzeitbetriebssystem gesteuert.

Interrupts können somit jederzeit, auch während der gesamten Initialisierungs-Zeitspanne ausgeführt werden.

Das Programm wird nach dem Schritt S11 im Schritt S03 fortgesetzt oder beispielsweise, wenn das Steuergerät heruntergefahren wird, kann das Programm in einem Schritt S13 beendet werden.

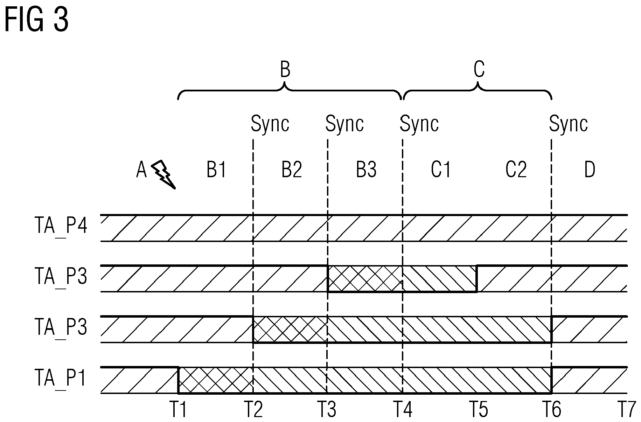

Figur 3 zeigt einen beispielhaften zeitlichen Verlauf des Verzögerns und des Wiederanlaufens des Tasksystems 30 nach der Detektion der Initialisierungsanforderung.

In einer Normalphase A wird das Tasksystem 30 in dem Normalbetriebsmodus betrieben. In Normalphase A können erste Tasks TA_P1, zweite Tasks TA_P2, dritte Tasks TA_P3 und vierte Tasks TA_P4 ausgeführt werden. In der Normalphase A werden die ersten Tasks TA_P1, die zweiten Tasks TA_P2, die dritten Tasks TA_P3 und vierten Tasks TA_P4 gemäß der vorgegebenen Task-Ablaufsteuerungs-Richtlinie des Echtzeitbetriebssystems, ausgeführt.

Sobald das Ereignis, das die Initialisierungsanforderung auslöst, oder die Initialisierungsanforderung zum Zeitpunkt T1 detektiert, beziehungsweise erkannt, wird, beginnt eine Verzögerungsphase B, in der das Tasksystem 30 in den Verzögerungsmodus überführt wird. Diese Verzögerungsphase B umfasst mehrere Teilphasen B1, B2, B3. Die Anzahl der Teilphasen B1, B2, B3 ist beispielsweise abhängig von einer Anzahl von Ausführungsprioritätsebenen. In einer ersten Teilphase B1 werden zweite Tasks TA_P2, dritte Tasks TA_P3 und vierte Tasks TA_PA4 normal, d. h. gemäß der vorgegebenen Task-Ablaufsteuerungs-Richtlinie des Echtzeitbetriebssystems ausgeführt. Erste Tasks TA_P1, die zum Zeitpunkt der Detektion der Initialisierungsanforderung bereits ausgeführt werden, werden bis zu ihrer Beendigung fortgesetzt und erste Tasks TA_P1, die von der Task-Ablaufsteuerung für eine Ausführung bereits aktiviert sind, aber noch nicht ausgeführt werden, werden verzögert. Wenn die Ausführung aller ersten Tasks TA_P1, deren Ausführung zum Zeitpunkt der Detektion der Initialisierungsanforderung bereits gestartet war, auf den ausgewählten beziehungsweise allen Prozessorkernen Core1, Core2 abgeschlossen ist, startet zum Zeitpunkt T2 eine zweite Teilphase B2.

In der zweiten Teilphase B2 werden dritte Tasks TA_P3 und vierte Tasks TA_P4 normal, d. h. gemäß der vorgegebenen Task-Ablaufsteuerungs-Richtlinie ausgeführt. Erste Tasks TA_P1 werden nicht aktiviert und nicht ausgeführt. Zweite Tasks TA_PA2, die zum Zeitpunkt T2 bereits ausgeführt wurden, werden bis zu ihrer Beendigung fortgesetzt und zweite TasksTA_P2, die von der Task-Ablaufsteuerung für eine Ausführung bereits aktiviert sind, aber noch nicht ausgeführt werden, werden verzögert. Wenn die Ausführung aller zweiten Tasks TA_P2, deren Ausführung zum Zeitpunkt T2 bereits gestartet war, auf den ausgewählten beziehungsweise allen Prozessorkernen Core1, Core2 abgeschlossen ist, startet zum Zeitpunkt T3 eine dritte Teilphase B3.

In der dritten Teilphase B3 können vierte Tasks TA_P4 normal ausgeführt werden. Erste Tasks TA_P1 und zweite Tasks TA_P2 werden nicht aktiviert und nicht ausgeführt. Dritte Tasks TA_P3, die zum Zeitpunkt T3 bereits ausgeführt werden, werden bis zu ihrer Beendigung fortgesetzt und dritte Tasks TA_P3, die von der Task-Ablaufsteuerung für eine Ausführung bereits aktiviert sind, aber noch nicht ausgeführt werden, werden verzögert. Wenn die Ausführung aller dritten Tasks TA_P3, deren Ausführung zum Zeitpunkt T3 bereits gestartet war, auf den ausgewählten beziehungsweise allen Prozessorkernen Core1, Core2 abgeschlossen ist, startet zum Zeitpunkt T4 eine Initialisierungs-Zeitspanne C.

Während der Initialisierungs-Zeitspanne C wird auf den ausgewählten beziehungsweise allen Prozessorkernen jeweils die Initialisierungs-Task ausgeführt. Die Initialisierungs-Zeitspanne umfasst beispielsweise eine erste Initialisierungsphase C1 und eine zweite Initialisierungsphase C2, die sich der ersten Initialisierungsphase C1 anschließt. Während der ersten Initialisierungsphase C1 können vorzugsweise nur vierte Tasks TA_P4 ausgeführt werden. In der zweiten Initialisierungsphase C2, die zum Zeitpunkt T5 startet werden nur vierte Tasks TA_P4 gemäß der vorgegebenen Task-Ablaufsteuerungs-Richtlinie und dritte Tasks TA_P3, die vor der Initialisierungszeitspanne aktiviert wurden, und dritte Tasks TA_P3, die während der zweiten Initialisierungsphase C2 aktiviert werden, ausgeführt gemäß der vorgegebenen Task-Ablaufsteuerungs-Richtlinie. Wenn mehrere dritte Tasks TA_P3 vorliegen können diese nach dem Fifo-Prinzip ausgeführt werden.

Der Initialisierungs-Zeitspanne C schließt sich beispielsweise eine weitere Normalphase A an. In der weiteren Normalphase A, die zum Zeitpunkt T6 startet, arbeitet das Tasksysteme im Normalbetriebsmodus. Es werden so beispielsweise die ersten Tasks TA_P1, die zweiten Tasks TA_P2, die dritten Tasks TA_P3 und die vierten Tasks_P4 gemäß der Task-Ablaufsteuerungs-Richtlinie basierend auf den Taskprioritäten der Tasks ausgeführt. Während dieser Normalbetriebsphase werden die verzögerten zweiten Tasks TA_P2 und die verzögerten ersten Tasks TA_P1, die bereits vor Initialisierungs-Zeitspanne aktiviert wurden, ausgeführt.

In der Initialisierungs-Zeitspanne C werden somit keine ersten Tasks TA_P1 und keine zweiten Tasks TA_P2 ausgeführt. Aber auch schon in der zweiten Teilphase B2 werden keine ersten Tasks TA_P1 ausgeführt. In der dritten Teilphase B3 werden keine ersten Tasks TA_P1 und keine zweite Tasks TA_P2 ausgeführt.

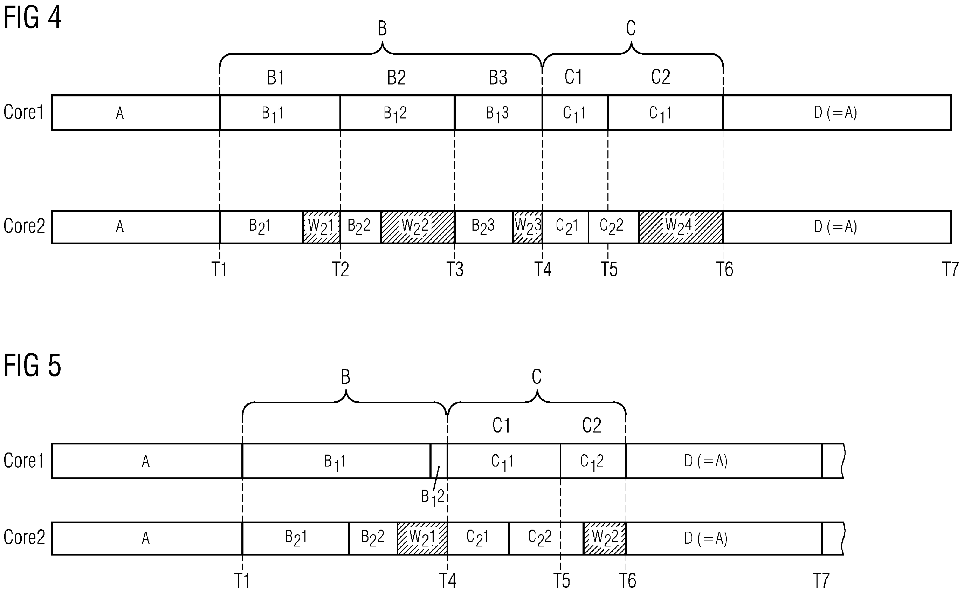

Figur 4 zeigt einen beispielhaften zeitlichen Verlauf des Verzögerns und des Wiederanlaufens des Tasksystems 30 nach der Detektion der Initialisierungsanforderung am Beispiel von zwei Prozessorkernen.

Es erfolgt eine Synchronisation des Tasksystems 30 über die ausgewählten Prozessorkerne beziehungsweise alle Prozessorkerne Core1, Core2 hinweg nach jeder Teilphase B1, B2, B3. Die Teilphasen B₁1, B₁2, B₁3 des ersten Prozessorkerns Core 1 und die Teilphasen B₂1, B₂2, B₂3 des zweiten Prozessorkerns Core 2 können unterschiedlich lange andauern. Es können somit beispielsweise bei dem zweiten Prozessorkern Wartezeiten W₂1, W₂2, W₂3 entstehen.

Die Initialisierungs-Zeitspanne C beginnt und endet auf den ausgewählten beziehungsweise allen Prozessorkernen Core1, Core2 gleichzeitig.

Die Dauer der Initialisierungs-Zeitspanne C ist abhängig von dem Ereignis, das die Initialisierungsanforderung auslöst. Beispielsweise unterschieden sich die Initialisierungs-Tasks nach einem Ende eines Fahrzyklus von den Initialisierungs-Tasks nach einem Auslesen eines Fehlerspeichers.

Auf den verschiedenen Prozessorkernen Core1, Core2 können für die Initialisierung nach einem Ereignis jeweils Initialisierungs-Tasks ablaufen, die unterschiedlich sind und deren Ausführung somit auch unterschiedlich lange dauern kann. Im Unterschied zu der Verzögerungsphase B schließt sich auf dem jeweiligen Prozessorkern Core1, Core2 die zweite Initialisierungsphase C₁2, C₂2 des jeweiligen Prozessorkerns unmittelbar der ersten Initialisierungsphase C₁1, C₂1 des jeweiligen Prozessorkerns an.

Der Beginn der zweiten Initialisierungsphase C2 d. h. der Zeitpunkt T5, bestimmt sich nach der Dauer der zeitlich längsten ersten Initialisierungsphase C₁1, C₁2 der Prozessorkerne Core1, Core2. Das Ende der zweiten Initialisierungsphase C2 d. h. der Zeitpunkt T6, bestimmt sich nach der zeitlich längsten Initialisierungs-Zeitspanne C₁, C₂ der Prozessorkerne.

Die weitere Normalphase A wird zum Zeitpunkt T6 gleichzeitig über alle Prozessorkerne hinweg gleichzeitig gestartet.

Figur 5 zeigt einen weiteren beispielhaften zeitlichen Verlauf des Verzögerns und des Wiederanlaufens des Tasksystems 30 nach der Detektion der Initialisierungsanforderung am Beispiel von zwei Prozessorkernen.

Im Unterschied zu dem in Figur 4 gezeigten Ausführungsbeispiel erfolgt eine Synchronisation des Tasksystems 30 über die ausgewählten Prozessorkerne beziehungsweise alle Prozessorkerne Core1, Core2 hinweg nicht nach jeder Teilphase B1, B2, B3 sondern in dem in Figur 5 gezeigten Ausführungsbeispiel erfolgt die Synchronisation des Tasksystems 30 der jeweiligen Prozessorkerne Core1, Core2 erst zu Beginn der Initialisierungs-Zeitspanne C zum Zeitpunkt T4.

Die Normalphase A bis zur Detektion der Initialisierungsanforderung verläuft auf beiden Prozessorkernen Core1, Core2 gleich. Die erste Teilphase B₁1, des ersten Prozessorkerns dauert länger als erste Teilphase B₂1 des zweiten Prozessorkerns Core2. Die zweite Teilphase B₁2, B₂2 der jeweiligen Prozessorkerne schließt sich jeweils unmittelbar an die erste Teilphase B₁1, B₂1 der jeweiligen Prozessorkerne an. Die Dauer der ersten Teilphase B₁1, B₂1 und der zweiten Teilphase B₁2, B₂2 der Prozessorkerne ist auf den beiden Prozessorkernen Core1, Core2 jeweils unterschiedlich lang. Da die erste Initialisierungsphase C1 auf den beiden Prozessorkernen Core1, Core2 gleichzeitig gestartet wird, entsteht eine erste Wartezeit W₂1 beim zweiten Prozessorkern Core2.

Im Unterschied zu dem in Figur 4 gezeigten Ausführungsbeispiel nutzt das in Figur 5 gezeigte Tasksystem 30 nur drei Ausführungsprioritätsebenen.

### Bezugszeichenliste

- 1: Steuergerät
- 10: Prozessorsystem
- 20: Echtzeitbetriebssystem
- 30: Tasksystem
- Core1: erster Prozessorkern
- Core2: zweiter Prozessorkern
- M1: Speichereinheit für ersten Prozessorkern
- M12: gemeinsame Speichereinheit
- M2: Speichereinheit für zweiten Prozessorkern
- R: Runnable Funktion
- SWC: Softwarekomponente
- TA: Task

## Patentansprüche

1. Verfahren zur Ausführungssteuerung von Tasks (TA) in einem Prozessorsystem (10) eines Steuergeräts (1), wobei
- das Prozessorsystem (10) einen Einzelkernprozessor mit einem einzelnen Prozessorkern oder einen Mehrkernprozessor mit einer Mehrzahl an Prozessorkernen (Core1, Core2) und ein Echtzeitbetriebssystem (20) aufweist, wobei das Echtzeitbetriebssystem (20) ein Tasksystem (30) mit Tasks (TA), die wiederholt oder sporadisch ausführbar sind und denen jeweils eine von zumindest zwei unterschiedlichen Ausführungsprioritäten zugeordnet sind, umfasst,
- das Prozessorsystem (10) Softwarekomponenten (SWC) aufweist, die jeweils auf einem oder mehreren der Prozessorkerne (Core1, Core2) ausführbar sind und mittels derer Funktionen, die dem Steuergerät (1) zugeordnet sind, realisiert werden,
und das Verfahren folgende Schritte umfasst:
- Betreiben des Tasksystems (30) in einem Normalbetriebsmodus für den einzelnen Prozessorkern beziehungsweise für ausgewählte Prozessorkerne (Core1, Core2) der Mehrzahl der Prozessorkerne (Core1, Core2) oder für alle Prozessorkerne (Core1, Core2) der Mehrzahl der Prozessorkerne (Core1, Core2),
- Detektion einer Initialisierungsanforderung für das Prozessorsystem, wobei die Initialisierungsanforderung von einem vorgegebenen Ereignis ausgelöst wird,
- in Antwort auf die Detektion der Initialisierungsanforderung Überführen des Tasksystems (30) des einzelnen Prozessorkerns beziehungsweise der ausgewählten Prozessorkerne (Core1, Core2) beziehungsweise aller Prozessorkerne (Core1, Core2) in einen Verzögerungsmodus, so dass während einer folgenden vorgegebenen Initialisierungs-Zeitspanne zumindest Tasks (TA), denen eine geringste Ausführungspriorität der Ausführungsprioritäten zugeordnet ist, auf dem einzelnen Prozessorkern beziehungsweise auf den ausgewählten Prozessorkernen beziehungsweise auf allen Prozessorkernen nicht ausgeführt werden,
- während der vorgegebenen Initialisierungs-Zeitspanne Ausführen einer jeweiligen Initialisierungs-Task auf dem einzelnen Prozessorkern beziehungsweise auf den ausgewählten Prozessorkernen (Core1, Core2) beziehungsweise auf allen Prozessorkernen (Core1, Core2), wobei mittels der jeweiligen Initialisierungs-Task alle oder ein Großteil der Programmvariablen der Softwarekomponenten (SWC) der Prozessorkerne, auf denen jeweils die jeweilige Initialisierungs-Task ausgeführt wird, in einen vorgegeben Zustand überführt werden,
- nach Ende der vorgegebenen Initialisierungs-Zeitspanne Überführen des Tasksystems (30) in den Normalbetriebsmodus für den einzelnen Prozessorkern beziehungsweise für die ausgewählten Prozessorkerne beziehungsweise für alle Prozessorkerne (Core1, Core2), wobei das Überführen in den Normalbetriebsmodus ein Ausführen von verzögerten Tasks (TA) umfasst.

2. Verfahren nach Anspruch 1, bei dem das Tasksystem (30) k Gruppen von Tasks mit k ≥ 2 umfasst, wobei die erste Gruppe erste Tasks (TA_P1) umfasst, denen eine niedrige Ausführungspriorität zugeordnet ist, und die k-te Gruppe k-te Tasks (TA_Pk) umfasst, denen eine höchste Ausführungspriorität zugeordnet ist, und der Schritt des Überführens des Tasksystems (30) in einen Verzögerungsmodus einen Schritt S umfasst, der für n = 1 bis n = k-i mit 0 ≤ i < k ausgeführt wird, wobei mit n=1 gestartet wird und der Schritt S umfasst:
- Fortsetzen der n-ten Tasks (TA_Pn), die bereits ausgeführt werden, bis zu ihrer Beendigung und Verzögern der Ausführung der n-ten Task (TA_Pn), die von der Task-Ablaufsteuerung für eine Ausführung aktiviert sind, aber noch nicht gestartet sind,
- wenn Schritt S auf dem einzelnen Prozessorkern beziehungsweise auf den ausgewählten Prozessorkernen (Core1, Core2) beziehungsweise auf allen Prozessorkernen (Core1, Core2) für die n-ten Tasks (TA_Pn) abgeschlossen ist, wiederholen von Schritt S für n=n+1.

3. Verfahren nach Anspruch 1, bei dem das Tasksystem (30) k Gruppen von Tasks mit k ≥ 2 umfasst, wobei die erste Gruppe erste Tasks (TA_P1) umfasst, denen eine niedrige Ausführungspriorität zugeordnet ist, und die k-te Gruppe k-te Tasks (TA_Pk) umfasst, denen eine höchste Ausführungspriorität zugeordnet ist, und
der Schritt des Überführens des Tasksystems (30) in einen Verzögerungsmodus einen Schritt S umfasst, der für n = 1 bis n = k-i mit 0 ≤ i < k ausgeführt wird, wobei mit n=1 gestartet wird und der Schritt S umfasst:
- Fortsetzen der n-ten Tasks (TA_Pn) des jeweiligen Prozessorkerns (Core1, Core2), die bereits ausgeführt werden, bis zu ihrer Beendigung und Verzögern der Ausführung der n-ten Task (TA_Pn) des jeweiligen Prozessorkerns, die von der Task-Ablaufsteuerung für eine Ausführung aktiviert sind, aber noch nicht gestartet sind
- wenn Schritt S auf dem jeweiligen Prozessorkern (Core1, Core2) für die n-ten Tasks (TA_Pn) abgeschlossen ist, wiederholen von Schritt S für n=n+1.

4. Verfahren nach einem der vorstehenden Ansprüche, wobei
- die Phase des Überführens in den Verzögerungsmodus auf den ausgewählten Prozessorkernen (Core1, Core2) beziehungsweise allen Prozessorkernen (Core1, Core2) gleichzeitig startet und/oder
- die Initialisierungs-Zeitspanne auf den ausgewählten Prozessorkernen (Core1, Core2) beziehungsweise allen Prozessorkernen gleichzeitig startet und/oder
- die Phase des Überführens in den Normalbetriebsmodus auf den ausgewählten Prozessorkernen (Core1, Core2) beziehungsweise auf allen Prozessorkernen (Core1, Core2) gleichzeitig startet.

5. Verfahren nach einem der vorstehenden Ansprüche, wobei während des Überführens des Tasksystems (30) in einen Verzögerungsmodus zumindest für einen Teil der Tasks (TA), dessen Ausführung verzögert wird, eine Information, dass der jeweilige Task (TA) verzögert ist, gespeichert wird.

6. Verfahren nach einem der vorstehenden Ansprüche, bei dem das Ausführen der verzögerten Tasks (TA) abhängig von der Ausführungsprioritäten der verzögerten Tasks (TA) erfolgt.

7. Verfahren nach einem der vorstehenden Ansprüche 2 bis 6, bei dem in einer ersten Initialisierungsphase (C1) während der Initialisierungs-Zeitspanne ausschließlich k-te Tasks (TA_Pk) gemäß der vorgegebenen Task-Ablaufsteuerungs-Richtlinie ausgeführt werden

8. Verfahren nach einem der vorstehenden Ansprüche 2 bis 7, bei der in einer zweiten Initialisierungsphase (C2) während der Initialisierungs-Zeitspanne ausschließlich k-te Task (TA_Pk) sowie verzögerte (k-1)-te Tasks und/oder in der zweiten Initialisierungsphase (C2) aktivierte (k-1)-te Tasks ausgeführt werden.

9. Verfahren nach einem der vorstehenden Ansprüche, wobei das Steuergerät ein Steuergerät eines Fahrzeugs ist und das vorgegebene Ereignis ein Zurücksetzen des Prozessors und/oder ein Herunterfahren des Prozessorsystems und/oder ein Löschen eines Speicherinhalts eines nichtflüchtigen Speichers und/oder ein Unfall des Fahrzeugs und/oder ein Ende eines Fahrzyklus des Fahrzeugs und/oder eine Detektion eines Kurbelwellenpositionssensorsignals zum Start eines Motors umfasst.

10. Verfahren nach einem der vorstehenden Ansprüche, wobei der Initialisierungstask abhängig ist von dem Ereignis, das die Initialisierungsanforderung auslöst.

11. Verfahren nach einem der vorstehenden Ansprüche 2 bis 10, wobei die Zuordnung der Tasks zu den Gruppen von Tasks abhängig ist von dem Ereignis, das die Initialisierungsanforderung auslöst.

12. Taskausführungssteuerung für ein Prozessorsystem (10) eines Steuergeräts (1) eines Fahrzeugs, wobei
- das Prozessorsystem (10) einen Einzelkernprozessor mit einem einzelnen Prozessorkern oder einen Mehrkernprozessor mit einer Mehrzahl von Prozessorkernen (Core1, Core2) und ein Echtzeitbetriebssystem (20) aufweist, wobei das Echtzeitbetriebssystem (20) ein Tasksystem (30) mit Tasks (TA), die wiederholt oder sporadisch ausführbar sind und denen jeweils eine von zumindest zwei unterschiedlichen Ausführungsprioritäten zugeordnet sind, umfasst,
- das Prozessorsystem (10) Softwarekomponenten (SWC) aufweist, die jeweils auf einem oder mehreren der Prozessorkerne (Core1, Core2) ausführbar sind und mittels derer Funktionen, die dem Steuergerät (1) zugeordnet sind, realisiert werden, und
- die Taskausführungssteuerung ausgebildet ist, die Schritte des Verfahren nach einem der Ansprüche 1 bis 11 auszuführen.

13. Steuergerät (1) für ein Fahrzeug, aufweisend ein Prozessorsystem (10) mit einer Taskausführungssteuerung nach Anspruch 8, wobei
- das Prozessorsystem (10) einen Einzelkernprozessor mit einem einzelnen Prozessorkern oder einen Mehrkernprozessor mit einer Vielzahl von Prozessorkernen (Core1, Core2) und ein Echtzeitbetriebssystem (20) aufweist, wobei das Echtzeitbetriebssystem (20) ein Tasksystem 30) mit Tasks (TA), die wiederholt oder sporadisch ausführbar sind und denen jeweils eine von zumindest zwei unterschiedlichen Ausführungsprioritäten zugeordnet sind, umfasst,
- das Prozessorsystem (10) Softwarekomponenten (SWC) aufweist, die jeweils auf einem oder mehreren der Prozessorkerne (Core1, Core2) ausführbar sind und mittels derer Funktionen, die dem Steuergerät (1) zugeordnet sind, realisiert werden.

14. Computerprogramm umfassend Befehle, die bei der Ausführung des Programms durch einen Computer diesen veranlassen, das Verfahren nach einem der Ansprüche 1 bis Anspruch 11 auszuführen.

15. Computerlesbares Medium, umfassend Befehle, die bei der Ausführung durch einen Computer diesen veranlassen, das Verfahren nach einem der Ansprüche 1 bis 11 auszuführen.
